# EUROPÄISCHE PATENTANMELDUNG

(11) **EP 4 306 880 A1**
(43) Veröffentlichungstag der Anmeldung: **17.01.2024**
(21) Anmeldenummer: 23183748.5
(22) Anmeldetag: 06.07.2023
(51) Int. Cl.: F25D 11/00, A47F 3/04, F25D 23/12, F25D 25/02, A47B 31/02, A47J 39/00

(54) **SYSTEM UND WÄRMEERZEUGUNGSEINRICHTUNG ZUR TEMPERIERUNG ODER ERHITZUNG VON SPEISEN**

(30) Priorität: 13.07.2022 DE 202022103937 U; 24.10.2022 DE 102022127993; 26.01.2023 DE 102023101906
(71) Anmelder: MenüMobil Food Service Systems GmbH, 6401 Inzing (AT)
(72) Erfinder: Abenthung, Johannes, 6401 Inzing (AT)
(74) Vertreter: Körfer, Thomas

(57) **Zusammenfassung**

System und Verfahren zur Temperierung oder Erhitzung von Speisen mit mindestens einen Raum (2) zur Aufnahme mehrerer Trageeinrichtungen (20) für Speisen und mindestens eine Temperiereinrichtung. Der mindestens ein Raum (2) zur Aufnahme mehrerer Trageeinrichtungen (20) weist mindestens eine Halteeinrichtung (3) auf, die dazu ausgelegt ist, die Trageeinrichtung (20) für Speisen aufzunehmen. Die Trageeinrichtungen (20) sind in dem Raum (2) beabstandet angeordnet. Der Raum (2) ist in zumindest zwei Kammern (4, 37) unterteilt, die sich jeweils bis zu zumindest einer Seitenwand (5) erstrecken. Zumindest eine der Trageeinrichtungen (20) erstreckt sich über mehrere Kammern (4, 37). Jede Kammer (4, 37) ist unabhängig temperierbar, und die Kammern (4, 37) sind durch eine Trennwand (6) zueinander thermisch isoliert. Zumindest eine der Temperiereinrichtungen ist ein Kältegerät, wobei das Kältegerät eine Kälteerzeugungseinrichtung und einen Kältespeicher aufweist.

## Beschreibung

Die Erfindung betrifft ein System zur Temperierung oder Erhitzung von Speisen und eine Wärmeerzeugungseinrichtung zur Integration in das System.

Die Menge an Speisen, die zum Verzehr vorbereitet und fertig portioniert an Einrichtungen wie Krankenhäuser, Schulen, Kindertageseinrichtungen, Kantinen usw. geliefert werden, nimmt ständig zu. Durch die vorgefertigten Mahlzeiten ist es möglich, die aufwändige und kostenintensive Bereitstellung von Küchen in den Einrichtungen zu vermeiden.

Um die vorbereiteten Speisen zu den Einrichtungen zu transportieren, sind Wagen bekannt, die für den Transport von Tabletts mit den darauf befindlichen Speisen vorgesehen sind. Meist sind warme und kalte Speisen, wie z.B. ein Braten und ein Salat, gemeinsam auf einem Tablett zu transportieren. Dazu weisen die bekannten Wagen zwei für unterschiedliche Temperaturen vorgesehene Kammern auf. Die eine Kammer nimmt dabei den Bereich der Tabletts mit den kühlen Speisen und die andere Kammer den Bereich der Tabletts mit den warmen Speisen auf. Um einen gegenseitigen Temperaturaustausch zwischen den Speisen zu vermeiden ist eine Trennwand zwischen den Kammern vorgesehen.

Die FR 2 684 281 A1 zeigt einen solchen Transportwagen zum Aufbewahren und Verteilen von Speisen. Der Transportwagen ist mit einer isolierenden vertikalen Trennwand ausgestattet, die mit Schlitzen zur Aufnahme von Speisentabletts mit zwei Zonen versehen ist. Eine Zone des Speisetabletts ist für warme Speisen und die andere für kalte Speisen vorgesehen. Der Transportwagen ist mit einer Einheit, die mit einem Kühlabschnitt und einem Kühl- und Heizabschnitt ausgestattet ist, koppelbar. Diese Einheit verbleibt fest und dauerhaft an einem festen Ort, z. B. in Krankenhausstationen. Der Transportwagen wird während der Aufbewahrung bzw. der Wiedererwärmung der warm zu servierenden Mahlzeiten mit dieser Einheit gekoppelt.

Ein Nachteil ist der hohe Energiebedarf zum Erhitzen der Speisen.

Der Erfindung liegt somit die Aufgabe zugrunde ein System zur raschen und energieeffizienten Erhitzung oder Temperierung von Speisen eine für das System vorgesehene Wärmeerzeugungseinrichtung zu schaffen, die es ermöglichen, vorbereitete Speisen standortunabhängig auf die dafür vorgesehene Temperatur effizient zu erwärmen und/oder zu kühlen.

Die Aufgabe wird durch ein System zur Temperierung oder Erhitzung von Speisen mit den Merkmalen des Anspruchs 1 und eine Wärmeerzeugungseinrichtung zur Integration in das System mit den Merkmalen des Anspruchs 12 gelöst. Vorteilhafte Weiterbildungen sind Gegenstand der hierauf rückbezogenen Unteransprüche.

Ein Aspekt der Erfindung betrifft ein System zur Temperierung oder Erhitzung von Speisen. Das System weist mindestens einen Raum zur Aufnahme mehrerer Trageeinrichtungen für Speisen und mindestens eine Temperiereinrichtung auf. Mindestens ein Raum zur Aufnahme mehrerer Trageeinrichtungen weist mindestens eine Halteeinrichtung auf. Die mindestens eine Halteeinrichtung nimmt die Trageeinrichtung für Speisen auf. Die Trageeinrichtungen sind in dem oben genannten Raum beabstandet angeordnet. Der Raum ist in zumindest zwei Kammern unterteilt, die sich jeweils bis zu zumindest einer Seitenwand erstrecken. Zumindest eine der Trageeinrichtungen erstreckt sich über mehrere Kammern, wobei jede Kammer unabhängig temperierbar ist. Die Kammern sind durch eine Trennwand zueinander thermisch isoliert. Zumindest eine der Temperiereinrichtungen ist ein Kältegerät. Das Kältegerät weist weiter eine Kälteerzeugungseinrichtung und einen Kältespeicher auf.

Die Temperiereinrichtung, die als Kältegerät ausgebildet ist, mit dem Kältespeicher, ermöglicht in besonders vorteilhafter Weise ein Kühlen von Speisen mit reduziertem Energieaufwand. Das Kältegerät kann bei Energieüberschuss am Stromnetz, wie er beispielsweise an sonnigen Tagen oder windigen Tagen auftritt, als Kälteenergie in den Kältespeicher einspeichern. Während des weiteren Kühlens, kann das Kältegerät in vorteilhafter Weise mit reduzierter Leistung die im System befindlichen Speisen kühlen. Die Anschlussleistung des Kühlgerät kann in vorteilhafter Weise reduziert werden, so dass eine Energieversorgung aus einem Transportmittel ausreicht. Dadurch bleibt die Kühlkette auch während eines längeren Transports erhalten.

Bevorzugt erzeugt die Temperiereinrichtung zumindest einen temperierten Luftstrom zum Transport der Wärmeenergie. Dazu wiest mindestens eine Seitenwand der mindestens einen Kammer mindestens eine Austrittsöffnung für den Luftstrom auf. Zwischen den temperierten Luftströmen ist ein Trennelement in der Seitenwand vorgesehen. Bevorzugt ist in jeder der durch die vertikal beabstandeten Trageeinrichtungen gebildeten Teilkammern mindestens eine Austrittsöffnung vorgesehen. Weiter bevorzugt lenkt die Austrittsöffnung den temperierten Luftstrom in eine vorherbestimmte Richtung.

Die Austrittsöffnungen in der Seitenwand und die Trennelemente, die bevorzugt den Teilkammern zugeordnet sind, ermöglichen in besonders vorteilhafter Weise eine punktgenaue Wärmezufuhr an die Trageeinrichtung mit unabhängigen Temperaturen. So ist es möglich, Speisen mit unterschiedlichen Erwärmungsparametern fachgerecht zu erwärmen.

Der Kältespeicher enthält bevorzugt ein Phasenübergangsmaterial. Das Phasenübergangsmaterial ist weiter bevorzugt aus der Gruppe der Salzhydrate, der Gashydrate, der Paraffine, und/oder Wasser ausgewählt. Die Phasenübergangsmaterialien stellen während des Phasenübergangs in besonders vorteilhafter Weise eine nahezu konstante Temperatur zur Verfügung.

Bevorzugt weist das Kältegerät zumindest einen Wärmetauscher auf. Der Kältespeicher kann in bevorzugter Weise thermisch mit dem Wärmetauscher in Verbindung stehen.

Die Kälteerzeugungseinrichtung weist bevorzugt mindestens einen Verdichter, insbesondere einen Kompressor, auf. Die Kälteerzeugungseinrichtung weist weiter mindestens einen Verdampfer auf, der mit jeweils einem Verdichter verbunden ist. Der mindestens eine Verdampfer ist jeweils mit dem Wärmetauscher thermisch gekoppelt.

Besonders bevorzugt weist die Kälteerzeugungseinrichtung mindestens zwei Verdichter, insbesondere zwei Kompressoren, und mindestens zwei Verdampfer auf. Der zweite und/oder jeder weitere Verdichter ist zuschaltbar und wegschaltbar. So lässt sich in besonders vorteilhafter Weise die Kälteerzeugung bedarfsgerecht regeln. Bei geringem Kältebedarf kann beispielsweise nur ein Verdichter mit dem ihm zugehörigen Verdampfer zugeschalten sein. Dabei kann der eine Verdichter besonders effektiv im Volllastbetrieb betrieben werden. Durch den Betrieb in Volllast lassen sich die auftretenden Verluste besonders gering halten.

Der erste Verdichter mit dem ersten Verdampfer weist bezogen auf die weiteren Verdichter mit den weiteren Verdampfern bevorzugt eine höhere Kälteerzeugungsleistung auf. Bevorzugt weist der erste Verdichter mit dem ersten Verdampfer eine mindestens doppelte Kälteerzeugungsleitung, besonders bevorzugt eine mindestens vierfache Kälteerzeugungsleitung und am meisten bevorzugt eine mindestens sechsfache Kälteerzeugungsleitung, bezogen auf die weiteren Verdichter mit den weiteren Verdampfern auf. So lässt sich in besonders vorteilhafter Weise die durch die Kälteerzeugungseinrichtung zur Verfügung gestellte Kühlleistung anpassen. Mit einer solchen Anpassung der Kühlleistung ist es möglich, einen zu kühlenden Raum besonders energiesparend zu kühlen.

Vorzugsweise ist die mindestens eine Austrittsöffnung für den temperierten Luftstrom direkt in die Seitenwand geformt. Die direkt in die Seitenwand geformten Austrittsöffnungen ermöglichen in vorteilhafter Weise einen strömungsgünstigen Luftstrom mit geringen unerwünschten Verwirbelungen bzw. definierten Verwirbelungen.

Die Seitenwand aus einer Platte besteht bevorzugt aus einem Metallblech und besonders bevorzugt aus einem Edelstahlblech. Die Ausführung der Seitenwände aus Metall insbesondere aus Edelstahl ermöglichen besonders vorteilhaft eine dem Lebensmittelrecht entsprechende Reinigung. Dies lässt sich in einfacher Weise einstückig fertigen.

Die mindestens eine Austrittsöffnung für den temperierten Luftstrom weist bevorzugt eine Düse auf. Eine Düse als Austrittsöffnung ermöglicht in vorteilhafter Weise ein gezieltes Lenken des Luftstroms auf den gewünschten Bereich der Trageeinrichtung.

Jede Trageeinrichtung und/oder Gruppen von Trageeinrichtungen ist bzw. sind bevorzugt unterschiedlich temperierbar.

Vorzugsweise weist der Raum zumindest eine waagerechte Teilung auf, die sich jeweils bis zu zumindest einer Seitenwand erstreckt. Alternativ erstreckt sich die waagerechte Teilung über mehrere Kammern. Jeder durch die waagerechte Teilung und/oder die Kammern gebildete Bereich ist unabhängig temperierbar. So lässt sich in besonders vorteilhafter Weise ein Überhitzen der oben im Raum zur Aufnahme mehrerer Trageeinrichtungen befindlichen Speisen vermeiden. Außerdem wird ein zu starkes Abkühlen der im unteren Bereich des Raums befindlichen Speisen vermieden.

Ein weiterer Aspekt der Erfindung betrifft eine Wärmeerzeugungseinrichtung zur Integration in ein System zur Temperierung oder Erhitzung von Speisen. Die Wärmeerzeugungseinrichtung weist mindestens zwei elektrische Heizeinheiten, mindestens eine Temperatursensoreinheit je Heizeinheit und mindestens eine Regeleinheit je Heizeinheit auf. Die jeweils eine Temperatursensoreinheit ist thermisch an eine Heizeinheit gekoppelt. Des Weiteren ist die Heizeinheit und die Temperatursensoreinheit mit der Regeleinheit funktional verbunden. Die Regeleinheit ist dazu ausgelegt eine Temperatur der jeweiligen Heizeinheit mit Hilfe der jeweiligen Temperatursensoreinheit in einem vorgegebenen Bereich einzustellen, wobei die Temperaturen der Heizeinheiten voneinander unabhängig einstellbar sind. Pro Trageeinrichtungsebene kann auch nur eine Heizeinheit, eine Kühleinheit und eine Temperatursensoreinheit vorhanden sein.

Die Wärmeerzeugungseinrichtung für ein System zur Temperierung oder Erhitzung von Speisen mit der Regeleinheit und den unabhängigen Heizeinheiten mit den thermisch verbunden Temperatursensoreinheiten ermöglicht in vorteilhafter Weise eine exakte Temperierung oder Erhitzung eines oder mehrerer Luftströme mit unterschiedlichen Temperaturen.

Bevorzugt ist zumindest eine Heizeinheit auf einem Trägerelement befestigt, und/oder zumindest eine Heizeinheit flach ausgeführt. Die flach ausgeführte Heizeinheit lässt sich in besonders vorteilhafter Weise in Bereich mit engen Platzverhältnissen integrieren und ermöglicht eine besonders gute Wärmeabgabe.

Zwischen jeder der Heizeinheiten mit unterschiedlich einstellbarer Temperatur ist vorzugsweise ein thermisches Trennelement vorgesehen. Die thermischen Trennelemente stellen in besonders vorteilhafter Weise eine thermische Entkopplung zwischen den durch die Heizelemente gebildeten Temperaturzonen zur Verfügung.

Zumindest eine der Heizeinheiten weist bevorzugt ein Widerstandselement auf. Dabei ist das Widerstandselement in einem Kunststoff, bevorzugt in Silikon, eingebettet. Ein Heizelement, dessen Widerstandselement in einem Kunststoff oder in Silikon eingebettet ist, lässt sich in besonders vorteilhafter Weise leicht reinigen und desinfizieren.

Bevorzugt ist die jeweilige Temperatursensoreinheit gemeinsam mit dem Widerstandselement in der Heizeinheit eingebettet. Die Temperatursensoreinheit, die gemeinsam mit dem Widerstandselement in der Heizeinheit eingebettet ist, ermöglicht in besonders vorteilhafter Weise ein exaktes Messen der Temperatur des Heizelements und damit eine exakte Temperaturregelung.

Die dem Trägerelement gegenüberliegende Oberfläche der Heizeinheit weist bevorzugt eine Lamellenform oder eine Wellenstruktur auf. Die Oberfläche des Heizelements mit der Lamellenform oder Wellenstruktur ermöglicht in vorteilhafter Weise eine verbesserte Wärmeübertragung an einen vorbeiströmenden Luftstrom.

Nachfolgend werden Ausführungsbeispiele der Erfindung anhand der Zeichnung beispielhaft beschrieben. In der Zeichnung zeigen:
- FIG. 1:: ein Ausführungsbeispiel eines erfindungsgemäßen Systems zur Temperierung oder Erhitzung von Speisen;
- FIG. 2:: eine Zirkulation von temperierten Luftströmen im Ausführungsbeispiel des erfindungsgemäßen Systems zur Temperierung oder Erhitzung von Speisen;
- FIG. 3:: eine Innenansicht des Systems zur Temperierung oder Erhitzung von Speisen mit zwei Kammern gemäß einem erfindungsgemäßen Ausführungsbeispiel;
- FIG. 4:: eine Innenansicht des Systems zur Temperierung oder Erhitzung von Speisen mit Teilkammern gemäß einem erfindungsgemäßen Ausführungsbeispiel;
- FIG. 5A:: ein Kältegerät mit einer Kälteerzeugungseinrichtung gemäß einem erfindungsgemäßen Ausführungsbeispiel;
- FIG. 5B:: ein Kältegerät mit zwei Kälteerzeugungseinrichtungen gemäß einem erfindungsgemäßen Ausführungsbeispiel;
- FIG. 6A:: ein Ausführungsbeispiel einer erfindungsgemäßen Anordnung von vier Verdampfern auf einem gemeinsamen Kältespeicher;
- FIG. 6B:: ein Ausführungsbeispiel einer erfindungsgemäßen Anordnung von drei Verdampfern auf einem gemeinsamen Kältespeicher;
- FIG. 7:: eine getrennte Zirkulation von gemeinsam gekühlten Luftströmen gemäß einem erfindungsgemäßen Ausführungsbeispiel;
- FIG. 8:: eine Rückansicht des Systems mit vier Kälteerzeugungseinrichtungen gemäß einem erfindungsgemäßen Ausführungsbeispiel;
- FIG. 9A:: eine Vorderansicht einer Wärmeerzeugungseinrichtung gemäß einem erfindungsgemäßen Ausführungsbeispiel;
- FIG. 9B:: eine Seitenansicht einer Wärmeerzeugungseinrichtung gemäß einem erfindungsgemäßen Ausführungsbeispiel; und
- FIG. 10:: die Führung von temperierten Luftströmen durch an einer Seiten angeformte Luftführungen im Ausführungsbeispiel des erfindungsgemäßen Systems zur Temperierung oder Erhitzung von Speisen.

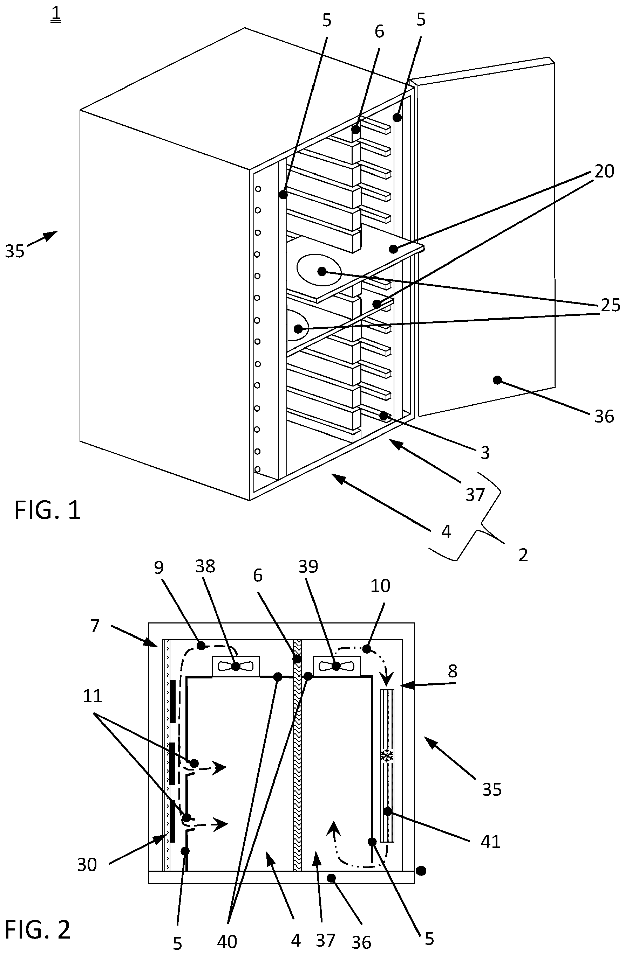

FIG. 1 zeigt ein Ausführungsbespiel zum erfindungsgemäßen System 1 zur Temperierung oder Erhitzung von Speisen. Das System wird durch ein kastenförmiges, dem System zugehöriges Gehäuse 35 umschlossen. Dieses Gehäuse besteht mindestens aus äußeren Seitenwänden, einer äußeren Rückwand, einem äußeren Boden, einem äußeren Deckel und einer Türe 36. Das Gehäuse 35 kann neben der Kastenform auch in Formen gestaltet sein, die beispielsweise eine Integration in ein Transportmittel erlauben.

Damit ein Temperaturaustausch zwischen Innenraum und Außenseite des Gehäuses minimiert wird, ist das Gehäuse isoliert aufgebaut. Die oben beschriebenen Elemente des Gehäuses sind im Ausführungsbeispiel sandwichförmig ausgebildet. Eine erste und eine dritte Schicht bildet die Außen- bzw. Innenfläche des Gehäuses. Zwischen dieser ersten und dritten Schicht ist als zweite Schicht eine Isolationsschicht vorgesehen. Diese Isolationsschicht besteht aus einem aufgeschäumten Kunststoff, einer Mineralwolle oder für besondere Anforderungen aus einem zumindest annähernd luftleeren Raum.

Das System zur Temperierung oder Erhitzung von Speisen enthält weiter mindestens einen Raum 2 zur Aufnahme mehrerer Trageeinrichtungen 20 für Speisen. Dieser Raum 2 ist innerhalb des Gehäuses angeordnet. In dem Raum 2 sind die Trageeinrichtungen 20 vertikal übereinander angeordnet und bilden jeweils eine horizontale Fläche. Dabei sind die Trageinrichtungen 20 beabstandet angeordnet. Der Abstand zwischen den Trageeinrichtungen ist mindestens so groß, dass die in dem System befindlichen auf den Trageeinrichtungen 20 angeordneten Speisen oder Behältnisse für die Speisen nicht mit der darüber angeordneten Trageeinrichtung 20 in Berührung kommen können.

Das System enthält Halteeinrichtungen 3, um die Trageeinrichtungen für Speisen in der oben beschriebenen vertikalen Weise aufzunehmen. Diese Trageeinrichtungen 20 sind in dem Raum 2 zur Aufnahme der Trageeinrichtungen angeordnet. Die Halteeinrichtungen 3 bestehen aus Leisten auf welchen die Trageeinrichtungen 20 so aufliegen, dass eine vorgesehene vertikale Position eingehalten wird. Die Halteeinrichtungen 3 können auch als Schienen vorgesehen sein. So kann ein Kippen der Trageeinrichtung 20 verhindert werden, wenn die Trageeinrichtung 20 nicht vollständig in den Raum 2 eingeschoben ist.

Der Raum 2, von dem die Trageeinrichtungen 20 aufgenommen sind, ist im Ausführungsbeispiel in zumindest zwei Kammern 4, 37 unterteilt. Die in FIG. 1 dargestellten zwei Kammern 4, 37 erstrecken sich jeweils bis zumindest einer Seitenwand 5. Die zumindest eine Seitenwand 5 ist beabstandet zum Gehäuse 35 angeordnet. Wie in diesem Ausführungsbeispiel dargestellt, erstrecken sich die Trageeinrichtungen 20 über die beiden Kammern 4, 37.

Jede Kammer der beiden Kammern 4, 37 ist unabhängig temperierbar. So können beispielsweise Speisen, die in einer ersten Kammer 4 angeordnet sind, erhitzt und eine gleichzeitig weitere Speise, die in einer zweiten Kammer 37 angeordnet sind, gekühlt werden. Dazu sind die Kammern 4, 37 durch eine Trennwand 6 gegenseitig thermisch isoliert. Die Trennwand ist dazu aus einem Kunststoff mit besonders niedrigem Wärmeleitwert oder einem isolierenden Schichtsystem aufgebaut. Bei dem Schichtsystem ist eine erste und eine dritte Schicht vorgesehen, die die Außenflächen der Trennwand 6 bilden. Zwischen diesen Außenflächen ist als zweite Schicht eine Isolationsschicht vorgesehen. Diese Isolationsschicht besteht aus einem aufgeschäumten Kunststoff, einer Mineralwolle oder, für besondere Anforderungen, aus einem zumindest annähernd luftleeren Raum.

In einem Ausführungsbeispiel kann der Raum 2 zumindest eine waagerechte Teilung aufweisen. Diese Aufteilung erstreckt sich jeweils bis zu zumindest einer Seitenwand 5. Die waagerechte Teilung kann sich über mehrere Kammern erstrecken. Jeder durch die waagerechte Teilung der Kammer gebildeten Bereiche ist unabhängig temperierbar. So kann die Wärmeverteilung und die Kälteverteilung innerhalb des Raums 2 optimal verteilen.

Alternativ ist auch ein Andocken eines Aufnahmewagens an eine Andockstation denkbar. Dabei ist auch denkbar, dass der zu heizende Bereich zunächst gekühlt wird, bevor er erwärmt wird. Dabei kann das Kühlaggregat der Kühlung für den zu kühlenden Bereich mitbenutzt werden.

FIG. 2 stellt eine Zirkulation von temperierten Luftströmen im erfindungsgemäßen System zur Temperierung oder Erhitzung von Speisen am Beispiel von zwei Kammern 2, 37, die mit unterschiedlichen Temperaturen beaufschlagt werden sollen, dar. In FIG. 2 ist eine Ansicht von oben in das System 1 zur Temperierung oder Erhitzung von Speisen dargestellt. Das System 1 enthält in diesem Ausführungsbeispiel auf der linken Seite eine Temperiereinrichtung 7 zur Erzeugung eines heißen Luftstroms 9 und auf der rechten Seite eine Temperiereinrichtung 8 zur Erzeugung eines kalten Luftstroms 10.

Zur Erzeugung des heißen Luftstroms 9 enthält das System 1 eine Wärmeerzeugungseinrichtung 30 und eine Luftumwälzeinrichtung, im Folgenden auch Ventilator 38 genannt. Der Ventilator 38 ist an einer inneren Rückwand 40 angeordnet. Der Ventilator 38 dient zur Erzeugung des Luftstroms 9. Dieser Luftstrom 9 wird durch einen Strömungskanal, der durch die Seitenwand 5 mit der innere Rückwand 40 und dem Gehäuse 35 gebildet ist, so über die Wärmeerzeugungseinrichtung 30 geleitet, dass sie den daran vorbei geleiteter Luftstrom 9 erhitzt. Der so erhitzte und damit heiße Luftstrom 9 wird über Austrittsöffnungen 11 in die entsprechende Kammer 4 eingeleitet. Die Austrittsöffnungen 11 sind so angeordnet und/oder geformt, dass der heiße Luftstrom 9 die Trageeinrichtung genau an der gewünschten Stelle mit dem heißen Luftstrom 9 beaufschlagt.

Der kalte Luftstrom 10 wird in dem System 1 mit Hilfe eines darin enthaltenen Kältegeräts 41 und eines Ventilators 39 erzeugt. Die zu kühlende Luft wird durch den Ventilator aus der Kammer 37, in der sich die kühlen Speisen befinden, eingesaugt, um den kalten Luftstrom 10 zu erzeugen. Der so erzeugte Luftstrom 10 wird über einen Wärmetauscher des Kältegeräts 41 geleitet. Dieser Wärmetauscher entzieht dem Luftstrom Wärmeenergie. Der erzeugte kalte Luftstrom 10 wird weiter in Richtung Türe 36 geleitet. Zwischen Tür 36 und Seitenwand 5 ist ein Spalt vorgesehen, um den kalten Luftstrom auf die Tragevorrichtungen 20 zu richten. So wird der gesamte Inhalt der Kammer 37 mit den zu kühlenden Speisen gleichmäßig abgekühlt.

Je nach Anforderung kann auch nur eine Wärmeerzeugungseinrichtung 30 vorgesehen sein, so dass beispielsweise die Kammer 37 ohne Wärmeerzeugungseinrichtung oder Kühlgerät ihre innere Temperatur nur geringfügig in abhängig von der Isolierung ändert.

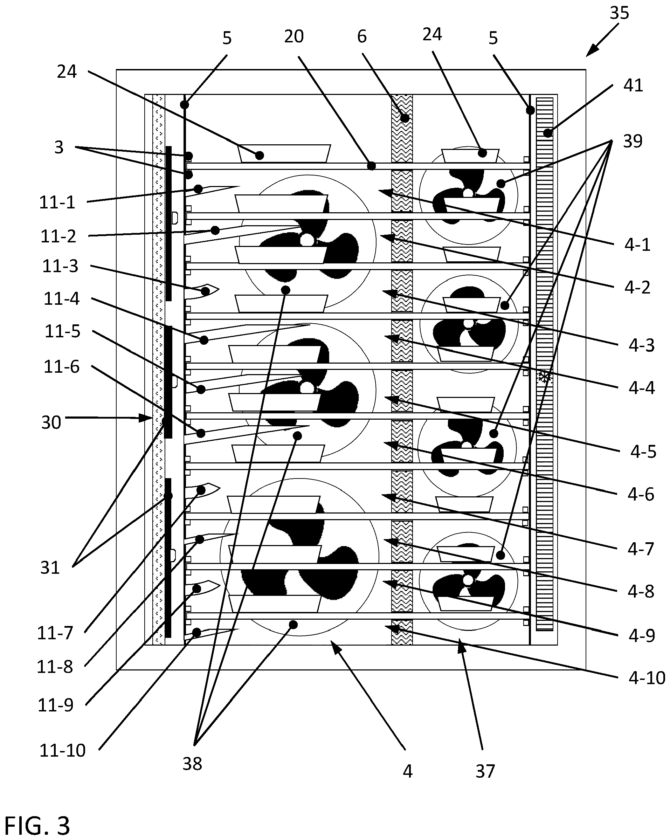

FIG. 3 zeigt eine Innenansicht zu einem erfindungsgemäßen Ausführungsbeispiel des Systems 1 zur Temperierung oder Erhitzung von Speisen 24 mit zwei Kammern 4, 37. Die Blickrichtung entspricht dabei der Richtung, in die die Trageeinrichtungen 20 in das System 1 eingeschoben werden.

An den Seitenwänden 5 sind Halteeinrichtungen 3 für die Trageeinrichtungen 20 angebracht und beispielsweise als Schienen ausgeführt. Die Tageeinrichtungen 20 werden von der Vorderseite des Systems 1 in die Halteeinrichtungen 3 eingeschoben. Eine Ausführung der Halteeinrichtungen 3 in Form von Schienen stellt sicher, dass die Trageeinrichtungen nicht aus den Halteeinrichtungen heraus kippen können, selbst wenn diese nur teilweise eingeschoben sind.

Zur thermischen Trennung der beiden Kammern 4, 37 ist eine Trennwand 6 vorgesehen. In FIG. 3 ist deutlich zu erkennen, dass die Trennwand 6 im Bereich der Trageeinrichtungen 20 unterbrochen ist, um das Einschieben der Trageeinrichtungen zu ermöglichen. Die eingeschobenen Trageeinrichtungen 20 reichen durch die Unterbrechungen der Trennwand 6 hindurch. Die durch die Unterbrechungen entstehenden Schlitze in der Trennwand 6 können Dichtelemente enthalten. Die Dichtelemente dienen dann zur Unterbindung eines Luftstroms zwischen den Kammern 4, 37 mit unterschiedlichen Temperaturniveaus.

In dem in FIG. 3 dargestellten Ausführungsbeispiel ist die durch die Trennwand 6 abgetrennte linke Kammer 4 zum Erhitzen von Speisen 24 vorgesehen. An der inneren Rückwand 40 sind drei Ventilatoren 38 angeordnet (siehe auch FIG. 2). Mit Hilfe der Ventilatoren 38 wird ein zu erhitzender Luftstrom (109 aus FIG. 2) erzeugt. Als Wärmequelle dient hierbei im Ausführungsbeispiel eine zwischen dem Gehäuse 35 und der linken Seitenwand 5 angeordnete Wärmeerzeugungseinrichtung 30. Die Wärmeerzeugungseinrichtung 30 enthält in diesem Ausführungsbeispiel drei Heizeinheiten 31, auf die der Luftstrom direkt aufgeblasen wird. Mit Hilfe der drei Heizeinheiten wird der darauf geblasene Luftstrom erhitzt. Dieses Aufblasen erfolgt mit größtmöglichem Luststrom und Luftmassen sowie höchstmöglicher Geschwindigkeit.

Der heiße Luftstrom wird über Austrittsöffnungen 11, 11-1, 11-2 ... 11-10 auf jeweils eine untere Fläche der Trageeinrichtungen 20 gerichtet. Dabei sind die Austrittsöffnungen so gestaltet, dass ein optimales Anströmen des zu erhitzenden Bereichs der jeweiligen Trageeinrichtung 20 erreicht wird. Beispielsweise sind die Austrittsöffnungen 11-1, 11-8 und 11-9 als kurze röhrenförmige Elemente mit einem zur Trageeinrichtung 20 abgeschrägten Ende ausgeführt. Die Austrittsöffnungen 11-2, 11-4, 11-5 und 11-6 sind beispielsweise als lange röhrenförmige Elemente mit einem zur Trageeinrichtung 20 abgeschrägten Ende ausgeführt, so dass ein gezieltes punktuelles Erwärmen der jeweiligen Trageeinrichtung 20 erreicht wird. Eine weitere geeignete Form für die Austrittsöffnungen 11-3, 11-7 und 11-9 ist eine bogenförmige Ausführung. Des Weiteren sind beispielsweise kastenförmige Austrittsöffnungen geeignet, den heißen Luftstrom auf einen größeren Bereich der Trageeinrichtung 20 zu richten. Außerdem können die Austrittsöffnungen durch Lamellen in der Seitenwand 5 realisiert sein. Die Ausführung der Austrittsöffnungen ist nicht auf die oben beschriebenen Formen beschränkt.

Die rechte Kammer 37 des Systems 1 ist in diesem Ausführungsbeispiel zum Kühlen der darin befindlichen Speisen 24 vorgesehen. Um den zu kühlenden Luftstrom 10 zu erzeugen, sind hier beispielhaft vier Ventilatoren 39 vorgesehen. Des Weiteren ist ein Kältegerät 41 vorgesehen, dessen Wärmetauscher zwischen dem Gehäuse 35 und der rechten Seitenwand 5 angeordnet ist. Der so erzeugte kalte Luftstrom wird, wie bereits beschrieben, über einen Spalt zwischen Tür 36 und der Seitenwand 5 in Richtung der Trageeinrichtungen geleitet. Es ist jedoch auch möglich Austrittsöffnungen entsprechend der linken Kammer 4 vorzusehen. Das Kältegerät 41 ist bevorzugt ein Kältegerät mit kleiner Anschlussleistung. Ein solches Kältegerät erzeugt die erforderliche Kühlleistung dadurch, dass es im Dauerbetrieb läuft. Durch die Verwendung eines Kältegeräts 41 mit kleiner Anschlussleistung ist die Geräuschemission auf ein Minimum reduziert. Außerdem werden durch ein solches Kältegerät Spitzenlasten an der Stromversorgung vermieden.

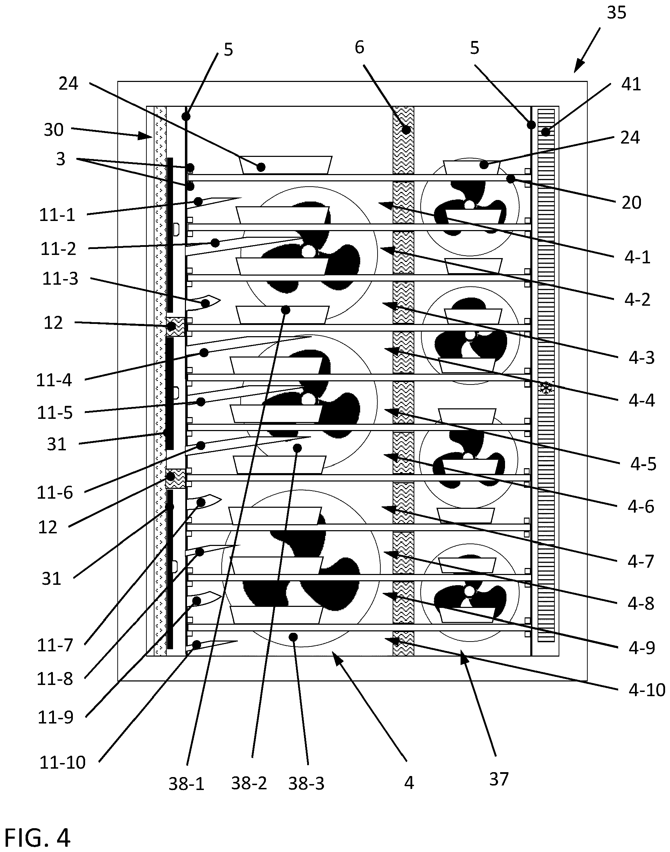

FIG. 4 zeigt eine Innenansicht des Systems 1 zur Temperierung oder Erhitzung von Speisen 24 mit Teilkammern gemäß einem erfindungsgemäßen Ausführungsbeispiel. In diesem Ausführungsbeispiel ist die linke Kammer 4 mit Hilfe zusätzlicher Trennelemente 12 und in der zugehörigen horizontalen Ebene angebrachten Trageeinrichtungen 20 in drei Teilkammern unterteilt. Jeder dieser Teilkammern ist im Ausführungsbeispiel jeweils ein Heizelement 31-1, 31-2 und 31-3 und jeweils ein Ventilator 38-1, 38-2 und 38-3 zugeordnet. Das Verhältnis muss nicht 1:1 sein, sondern kann auch davon abweichen. Es kann auch Kühlgerät 41 und ein Heizelement 31 pro Ebene vorgesehen sein.

Mit Hilfe dieser Anordnung lassen sich Speisen 24 gezielt entsprechend vorgegebener Parameter erhitzen. So können zum Beispiel in einer mittleren Ebene Speisen einer dafür vorgesehenen Temperatur erwärmt werden, indem die der Ebene zugeordnete Heizeinheit 31-2 auf eine entsprechende Temperatur eingestellt ist. Mit dem dazugehörigen Ventilator 38-2 wird der Luftstrom erzeugt, der über das Heizelement 31-2 mit Hilfe der zugehörigen Austrittsöffnungen 11-4, 11-5 und 11-6 auf die entsprechenden Trageeinrichtungen 20 übertragen wird. Die Erzeugung des heißen Luftstroms erfolgt analog für die obere Ebene, die das Heizelement 31-1 mit dem zugehörigen Ventilator 38-1 enthält, mit einer für die in dieser Ebene vorgesehenen Temperatur. Selbiges gilt für die untere Ebene mit Heizelement 31-3 und Ventilator 130-3.

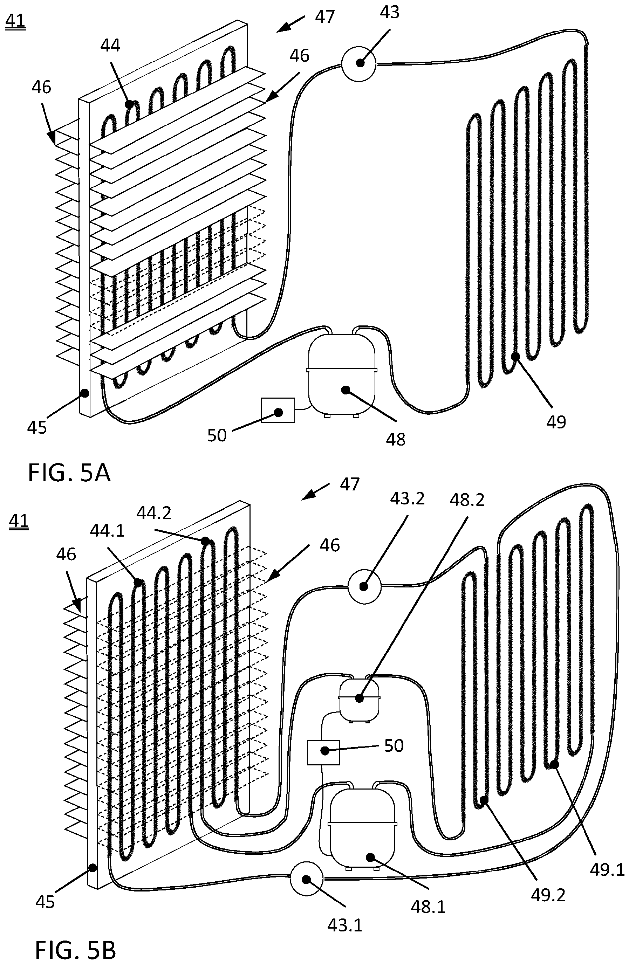

FIG. 5A zeigt ein Ausführungsbeispiel eines erfindungsgemäßen Kältegeräts 41. Das hier dargestellte Kältegerät 41 ist eine Kälteerzeugungseinrichtung auf Basis z. B. des Linde Kreisprozesses. In der Kälteerzeugungseinrichtung zirkuliert ein hermetisch eingeschlossenes Kältemittel. Die Kälteerzeugung erfolgt hierbei durch einen Verdampfungsprozess.

Um den Verdampfungsprozess auszulösen, wird der Aggregatszustand des Kältemittels von flüssig in gasförmig überführt. Hierzu wird das Kältemittel einer Expansionseinheit 43 zugeführt. Der Druck, unter dem das Kältemittel steht, wird durch eine Expansionseinheit 43 reduziert. Die Expansionseinheit 43 weist eine Drossel, ein Entspannungsventil oder ein Kapillarrohr auf.

Das so druckverminderte Kältemittel wird einem Verdampfer 44 zugeführt. Der Verdampfer 44 besteht in diesem Ausführungsbeispiel aus einem mäanderförmigen Rohr. Das Kältemittel im Verdampfer 44 wird durch das Überführen in den gasförmigen Zustand abgekühlt. Die so erzeugte Kälte wird über die Wandungen des mäanderförmigen Rohrs an die Umgebung und somit an einen Kältespeicher 45 abgegeben.

Der Verdampfer 44 ist in diesem Ausführungsbeispiel auf dem Kältespeicher 45 angebracht. Dabei ist der Verdampfer 44 mit dem Kältespeicher 45 thermisch mit einem niedrigen Wärmeübergangswiderstand gekoppelt. Der Kältespeicher 45 weist einen Behälter auf, der ein Phasenübergangsmaterial aufnimmt. Die in dem Verdampfer 44 erzeugte Kälte wird durch das Phasenübergangsmaterial in den Kältespeicher 45 übertragen und dort durch das Phasenübergangsmaterial gespeichert.

Das Phasenübergangsmaterial ist bevorzugt ein Material aus der Gruppe der Salzhydrate, der Gashydrate, der Paraffine, und/oder Wasser. Die Phasenübergangsmaterialien stellen während des Phasenübergangs in besonders vorteilhafter Weise eine nahezu konstante Temperatur zur Verfügung. Die Temperatur des Phasenübergangs vom festen zum flüssig Aggregatszustand von Wasser liegt bei ca. 0°C. Diese 0°C bleiben während des gesamten Schmelzvorgangs des aus Wasser gebildeten Eises nahezu konstant. So ist die Temperatur des Kältespeichers über einen Zeitraum, der von der Masse des Eises bzw. gefrorenen Wassers und der zugeführten Wärmeenergie abhängt, nahezu konstant.

Das Kältegerät 41 weist weiter zumindest einen Wärmetauscher 46, der mit dem Kältespeicher 45 in thermisch Verbindung steht, auf. Der Wärmetauscher 46 weist in diesem Ausführungsbeispiel lamellenförmig angeordnete Wärmeleitbleche auf. Diese Wärmeleitbleche bestehen aus einem Material mit guter Wärmeleitfähigkeit. Als Material sind zum Beispiel Aluminium, eine Aluminiumlegierung, Edelstahl etc. denkbar.

Die oben beschriebene Kälteeinheit 47 aus Verdampfer 44, Kältespeicher 45 und Wärmetauscher 46 ist innerhalb des Gehäuses 35 des Systems 1 zur Temperierung und Erhitzung von Speisen angeordnet. Die Kälteeinheit 47, insbesondere der Wärmetauscher 46, ist dazu vorgesehen von einem zu kühlenden Luftstrom angeströmt zu werden. Dabei wird dem Luftstrom über den Wärmetauscher 46 Wärmeenergie entzogen und in Richtung Kältespeicher 45 geleitet.

Um weiter Kälte erzeugen zu können, muss das in dem Verdampfer 44 befindliche gasförmige Kältemittel in seine flüssige Form zurückgeführt werden. Das gasförmige Kältemittel wird dazu in einen höheren Druck und durch die Druckerhöhung in eine höhere Temperatur überführt. Hierfür ist der Verdichter 48, in diesem Ausführungsbeispiel ein Kompressor, vorgesehen. Der Verdichter 48 beaufschlagt das gasförmige Kältemittel mit einem Druck, der dazu geeignet ist, dass das Kältemittel bei Zimmertemperatur in dem flüssigen Zustand vorliegt. Durch das Verdichten des Kältemittels erhitzt sich dieses Kältemittel, wodurch dieses in eine höhere Temperatur überführt wird.

Das aus dem Verdichter 48 ausgestoßene gasförmige Kältemittel steht nun unter hohem Druck und weist eine hohe Temperatur auf. Dieses heiße, gasförmige Kältemittel wird dem Verflüssiger 49 zugeführt. Das Kältemittel wird in dem Verflüssiger 49 abgekühlt. Dazu ist der Verflüssiger 49 außerhalb des Gehäuses 35 des Systems 1 zur Temperierung und Erhitzung von Speisen angeordnet. So erfolgt ein Wärmeaustausch zwischen Umgebungsluft und Kältemittel über den Verflüssiger 49. Das so abgekühlte Kältemittel, das unter hohem Druck steht, wird wieder flüssig.

Der oben beschriebene Prozess, in dem das Kältemittel zirkuliert, läuft in einem ständigen Kreislauf ab. Das heißt, dass das Kältemittel einem ständigen Wechsel zwischen flüssigen Zustand und gasförmigen Zustand unterliegt und dadurch ein Wärmetransfer erfolgt.

Der gesamte Kühlvorgang wird durch eine Steuereinheit 50 geregelt. Dabei wird über Sensoren (hier nicht dargestellt) eine Temperatur in dem zu kühlenden Raum gemessen. Diese Temperatur wird mit einer Vorgabetemperatur verglichen. Die Steuereinheit 50 Schaltet den Verdichter 48, so dass die Vorgabetemperatur in einem vorgegebenen Bereich eingehalten wird.

Das Kältegerät 41 kann in einem Ausführungsbeispiel eine Kälteerzeugungseinrichtung mit kleiner Anschlussleistung aufweisen. Diese Kälteerzeugungseinrichtung mit kleiner Leistung ist so ausgelegt, dass sie an einem einphasigen Niederspannungsnetz betrieben werden kann. Ein solches Netz ist beispielsweise in den Europäischen Ländern durch eine Nennspannung von 230 V und in den nordamerikanischen Ländern durch eine Nennspannung von 120 V gekennzeichnet.

Die Kälteerzeugungseinrichtung mit kleiner Anschlussleistungen ist in Kombination mit dem Kältespeicher 45 geeignet, eine hohe Kühlleistung zur Verfügung zu stellen. Dazu wird der Kältespeicher 45 mit einer durch die Kälteerzeugungseinrichtung erzeugten Kälteenergie vorgekühlt. Das Vorkühlen erfolgt bevorzugt im unbeladenen Zustand des Systems 1 zur Temperierung und Erhitzung von Speisen. Im unbeladenen Zustand befinden sich im Raum 2 zur Aufnahme von Trageeinrichtungen 20 keine Trageeinrichtungen 20. So steht nahezu die gesamte durch die Kälteerzeugungseinrichtung erzeugte Kühlleistung zum Kühlen der Kältespeichers 45 zur Verfügung. Mit der so zur Verfügung gestellten Kühlleistung wird der Kältespeicher 45 so lange aufgeladen, bis das gesamte Phasenübergangsmaterial in den Phasenzustand des Speicherns der Kälteenergie übergegangen ist.

Die Kälteerzeugungseinrichtung mit kleiner Anschlussleistungen ist in Kombination mit dem Kältespeicher 45 dazu ausgelegt, ohne Unterbrechung in einem Dauerbetrieb zu laufen. So wird über einen Zeitraum von 24 Stunden und mehr ausreichend Kühlenergie in den Kältespeicher 45 eingespeist und gespeichert. Die dadurch zur Kühlung der Speisen zur Verfügung stehende Kälteenergie entspricht der Kälteenergie, die durch eine Kälteerzeugungseinrichtung mit großer Anschlussleistungen erzeugt wird.

Durch die Verwendung einer Kälteerzeugungseinrichtung mit kleiner Anschlussleistung ist die Geräuschemission auf ein Minimum reduziert. So ist, im Gegensatz zu Kälteerzeugungseinrichtung mit großer Anschlussleistung, ein Betrieb der Kühlung des Systems 1 zur Temperierung und Erhitzung in Aufenthaltsbereichen möglich. Durch den Dauerbetrieb werden außerdem Lastspitzen im Stromnetz vermieden. So können mehrere Systeme 1 zur Temperierung und Erhitzung von Speisen gleichzeitig an einem vorhandene Stromnetz betrieben werden. Außerdem erzeugt eine Kälteerzeugungseinrichtung mit kleiner Anschlussleistung weniger Abwärme. Die reduzierte Abwärme ermöglich den Kühlbetrieb auch in kleineren Räumen. Auf eine künstliche Be- und Entlüftung des kleinen Raums kann somit verzichtet werden, ohne die Umgebungstemperatur nennenswert zu erhöhen.

Beim Beladen der Systems 1 zur Temperierung und Erhitzung von Speisen werden eine oder mehrere Trageeinrichtungen 20 mit darauf befindlichen Speisen 24 in den Raum 2 hineingeschoben. Abhängig von der Ausgangstemperatur der Speisen 24 und der Trageeinrichtungen 20, müssen diese auf eine geeignete Lagertemperatur gebracht werden. Weisen die Speisen 20 eine im Verhältnis zur Lagertemperatur höhere Temperatur auf, müssen diese durch das erfindungsgemäße Kältegerät 41 gekühlt werden. Die dazu notwendige Kälteenergie wird durch die Kälteerzeugungseinrichtung erzeugt. Ist die Kühlleistung nicht ausreichend, wird die Kälteerzeugungseinrichtung durch die in dem Kältespeicher 45 gespeicherte Kälteenergie unterstützt. Nach Erreichen der vorgegebenen Lagertemperatur erzeugt die Kälteerzeugungseinrichtung weiter Kälte, bis der Kältespeicher 45 wieder die maximale Kälteenergie gespeichert hat und/oder Kälteverluste des Systems 1 zur Temperierung und Erhitzung von Speisen ausgeglichen sind.

Wie bereits oben zu einem anderen Ausführungsbeispiel beschrieben, kann der Raum 2 des Systems 1 zur Temperierung und Erhitzung von Speisen eine linke Kammer 4 und eine rechte Kammer 37 aufweisen. Diese Aufteilung entspricht auch der Aufteilung in diesem Ausführungsbeispiel, wobei die Aufteilung in weiteren Ausführungsbeispielen beliebig gewählt werden kann. Die linke Kammer 4 ist zum Erwärmen von Speisen vorgesehen. Dabei wird den Speisen 24 über die Trageeinrichtungen 20 Wärmeenergie zugeführt. Die Trennwand 6 ist dazu vorgesehen, die linke Kammer 4 und die rechte Kammer 37 thermisch zu isolieren. Da die Isolationswirkung in Abhängigkeit vom Material der Trennwand 6 begrenzt ist, müssen die kalten Speisen der rechten Kammer 37 während des Erhitzens zusätzlich gekühlt werden. Die dazu notwendige Kühlleistung kann durch die Kälteerzeugungseinrichtung mit kleiner Anschlussleistung nicht vollständig erzeugt werden. Die zusätzliche Kälteenergie, die notwendig ist, um die rechte Kammer 37 wie vorgegeben zu temperieren, wird dem Kältespeicher 45 entnommen.

FIG. 5B zeigt ein Ausführungsbeispiel eines erfindungsgemäßen Kältegeräts 41 mit zwei Kälteerzeugungseinrichtungen. Die erste Kälteerzeugungseinrichtung weist eine erste Expansionseinheit 43.1, einen ersten Verdampfer 44.1, einen ersten Verdichter 48.1 und einen ersten Verflüssiger 49.1 auf. Die zweite Kälteerzeugungseinrichtung weist eine zweite Expansionseinheit 43.2, einen zweiten Verdampfer 44.2, einen zweiten Verdichter 48.2 und einen zweiten Verflüssiger 49.2 auf. Die Funktion jeder der beiden Kälteerzeugungseinrichtungen entspricht dem oben beschriebenen Ausführungsbeispiel.

Die jeweiligen Verdampfer 44.1 und 44.2 der beiden Kälteerzeugungseinrichtungen sind gemeinsam an einem Kältespeicher 45 angebracht. Dabei ist der erste Verdampfer 44.1 des ersten Kühlkreislaufs und der zweite Verdampfer 44.2 des zweiten Kühlkreislaufs mit dem Kältespeicher 45 thermisch gekoppelt.

In diesem Ausführungsbeispiel weist die erste Kälteerzeugungseinrichtung in Bezug auf die zweite Kälteerzeugungseinrichtung eine höhere Kälteerzeugungsleistung auf. Die erste Kälteerzeugungseinrichtung weist einen im Vergleich zur zweiten Kälteerzeugungseinrichtung großen Verdampfer 44.1 auf. Die Größe des ersten Verdampfers 44.1 und des zweiten Verdampfers 44.2 ist dabei so bemessen, dass die erzeugte Kälte leistungsgerecht in den Kältespeicher 45 übertragen wird. Die Kälteerzeugungseinrichtung mit der kleineren Kälteerzeugungsleistung ist dazu ausgelegt ständig aber relativ leise zu laufen, so dass eine Geräuschemission auf einem in einem Aufenthaltsraum zulässigen Niveau gehalten werden kann. Die Kälteerzeugungseinrichtung mit der kleineren Kälteerzeugungsleistung ist dazu ausgelegt, bei kurzfristig erhöhtem Kühlleistungsbedarf zugeschaltet zu werden.

Die Größe des jeweiligen ersten Verdichters 48.1 und des zweiten Verdichters 48.2 ist so ausgelegt, dass ausreichend Leistung zum Verflüssigen der Kältemittel zur Verfügung gestellt wird. Dabei ist auch die Größe der Verflüssiger 49.1 und 49.2 der Pumpleistung der jeweiligen Verdichter 48.1 und 48.2 so angepasst, dass das Kältemittel in jeder Kälteerzeugungseinrichtung bei jeder zulässigen Umgebungstemperatur in den flüssigen Aggregatszustand übergeführt wird. Die Kälteerzeugungsleitung des ersten Verdichters 48.1 mit dem ersten Verdampfer 44.1 kann beispielsweise das Doppelte, das Vierfache oder das Sechsfache der Kälteerzeugungsleitung des zweiten Verdichters 48.2 mit dem zweiten Verdampfer 44.2 betragen. So lässt sich in besonders vorteilhafter Weise die durch die Kälteerzeugungseinrichtung zur Verfügung gestellte Kühlleistung anpassen. Mit einer solchen Anpassung der Kühlleistung ist es möglich, einen zu kühlenden Raum besonders energiesparend zu kühlen.

Die Steuerung der beiden Kälteerzeugungseinrichtungen erfolgt durch eine gemeinsame Steuereinheit 50. Auch bei diesem Ausführungsbeispiel wird über Sensoren (hier nicht dargestellt) eine Temperatur in dem zu kühlenden Raum gemessen, die mit einer Vorgabetemperatur verglichen wird. Die Steuereinheit 50 schaltet je nach Kältebedarf den ersten Verdichter 48.1 oder den zweite Verdichter 48.2 so, dass die Vorgabetemperatur in einem vorgegebenen Bereich eingehalten wird. Dabei wird der erste Verdichter 48.1 bei hohem Kältebedarf und der zweite Verdichter 48.2 bei geringem Kältebedarf aktiviert. Für den Fall, dass eine besonders hohe Kälteleistung erforderlich ist, können durch die Steuereinheit 50 auch der erste Verdichter 48.1 und der zweite Verdichter 48.2 gleichzeitig aktiviert werden. Die Anzahl und die Leistung der in diesen Ausführungsbeispielen gezeigten Kälteerzeugungseinrichtungen ist nicht auf die hier gezeigte Anzahl oder Leistungsverhältnisse beschränkt.

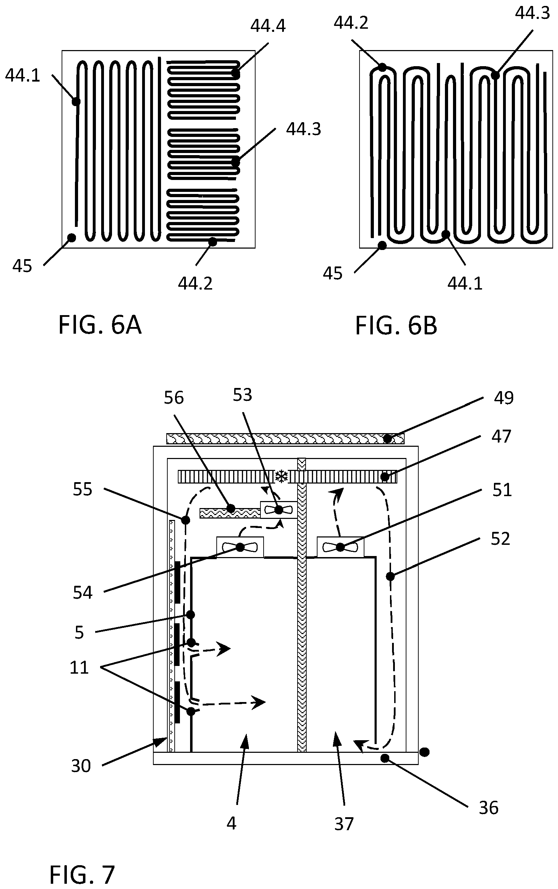

FIG. 6A zeigt ein Ausführungsbeispiel zur Anordnung von vier Verdampfern 44.1 bis 44.4 auf einem gemeinsamen Kältespeicher 45. Dabei bedeckt ein erster Verdampfer 44.1 mit großer Leistung eine im Verhältnis zu den weiteren Verdampfern 44.2 bis 44.4 große Fläche. Die weiteren Verdampfer 44.2 bis 44.4 sind jeweils gleich groß ausgeführt und auf der weiteren Fläche des Kältespeichers 45 verteilt. Durch eine solche Anordnung lässt sich die Kälteleistung des Kältegeräts 41 genau an einen Kältebedarf anpassen. Die Anpassung erfolgt durch Zu- und Wegschalten der einzelnen Kälteerzeugungseinrichtungen, indem der jeweilige Verdichter ein- bzw. ausgeschalten wird.

FIG. 6B zeigt ein weiteres Ausführungsbeispiel zur Anordnung von drei Verdampfern 44.1 bis 44.3 auf einem gemeinsamen Kältespeicher 45. In diesem Ausführungsbeispiel sind die Verdampfer 44.2 und 44.3 für die Kälteerzeugungseinrichtungen mit niedrigere Kälteleistung in den Mäandern des Verdampfers 44.1 für die Kälteerzeugungseinrichtungen mit hoher Kälteleistung integriert. So lässt sich eine gleichmäßige Kälteverteilung in dem Kältespeicher 45 erreichen. Die Anzahl und Anordnung der Verdampfer ist nicht auf die hier gezeigten Ausführungsbeispiele beschränkt.

FIG. 7 stellt eine Zirkulation von gemeinsam gekühlten Luftströmen im erfindungsgemäßen System zur Temperierung oder Erhitzung von Speisen am Beispiel von zwei Kammern 2, 37 dar. Das System 1 enthält in diesem Ausführungsbeispiel auf der linken Seite eine Temperiereinrichtung 7 zur Erzeugung eines heißen Luftstroms 9. Das System 1 weist eine zum Kältegerät gehörige Kälteeinheit 47 mit einem außerhalb des Gehäuses 35 angebrachten Verflüssiger 49 auf.

Ein erster kalte Luftstrom 10 wird in dem System 1 mit Hilfe der darin enthaltenen Kälteeinheit 47 und eines Ventilators 51 erzeugt. Die zu kühlende Luft wird durch den Ventilator aus der Kammer 37, in der sich die kühlen Speisen befinden, eingesaugt, um den kalten Luftstrom 52 zu erzeugen. Der so erzeugte Luftstrom 52 wird über einen Wärmetauscher der Kälteeinheit 47 geleitet. Dieser Wärmetauscher entzieht dem Luftstrom Wärmeenergie. Der erzeugte kalte Luftstrom 52 wird weiter in Richtung Austrittsöffnungen 11 geleitet. Zwischen Tür 36 und Seitenwand 5 ist ein Spalt vorgesehen, um den kalten Luftstrom auf die Tragevorrichtungen 20 zu richten. So wird der gesamte Inhalt der Kammer 37 mit den zu kühlenden Speisen gleichmäßig abgekühlt.

Ein zweiter kalte Luftstrom 10 wird in dem System 1 mit Hilfe der darin enthaltenen Kälteeinheit 47, einem Kühlventilatoren 53 und einem Heizventilator 54 erzeugt. Die zu kühlende Luft wird durch den Heizventilator 54 aus der Kammer 4, in der sich die Speisen, die zum späteren Erwärmen vorgesehen sind, befinden, eingesaugt. Die so eingesaugte Luft wird mit Hilfe des Kühlventilators 53 auf einen Wärmetauscher der Kälteeinheit 47 geleitet. Dieser Wärmetauscher entzieht dem Luftstrom Wärmeenergie. Der so erzeugte kalte Luftstrom 55 wird weiter in Richtung Seitenwand 5 geleitet. Der kalte Luftstrom tritt durch die Austrittsöffnungen 11 in die Kammer 4 ein. So wird der gesamte Inhalt der Kammer 37 mit den zu kühlenden Speisen gleichmäßig abgekühlt. Die Temperiereinrichtung 7 ist während des Kühlens der Kammer 4, in der sich die Speisen, die zum späteren Erwärmen vorgesehen sind, befinden, deaktiviert.

Die in dem System befindlichen Speisen können in dem System 1 mit Hilfe eines heißen Luftstroms erhitzt werden. Zur Erzeugung des heißen Luftstroms enthält das System 1 weiter eine Wärmeerzeugungseinrichtung 30. Der heiße Luftstrom wird durch den Heizventilator 54 erzeugt. Der Kühlventilator 53 bleibt in dieser Betriebsart inaktiv. Der durch den Heizventilator 54 erzeugte heiße Luftstrom wird durch eine Prallplatte 56 aus Isoliermaterial in Richtung Seitenwand 5 geleitet. Durch das Umleiten des Luftstroms mit Hilfe der Prallplatte 56 wird ein Erwärmen der Kälteeinheit 47 vermieden. Der heiße Luftstrom wird durch einen Strömungskanal, der durch die Seitenwand 5 mit der innere Rückwand 40 und dem Gehäuse 35 gebildet ist, so über die Wärmeerzeugungseinrichtung 30 geleitet, dass sie den daran vorbei geleiteter Luftstrom 9 erhitzt. Der so erhitzte und damit heiße Luftstrom wird über Austrittsöffnungen 11 in die entsprechende Kammer 4 eingeleitet. Die Austrittsöffnungen 11 sind so angeordnet und/oder geformt, dass der heiße Luftstrom 9 die Trageeinrichtung genau an der gewünschten Stelle mit dem heißen Luftstrom 9 beaufschlagt.

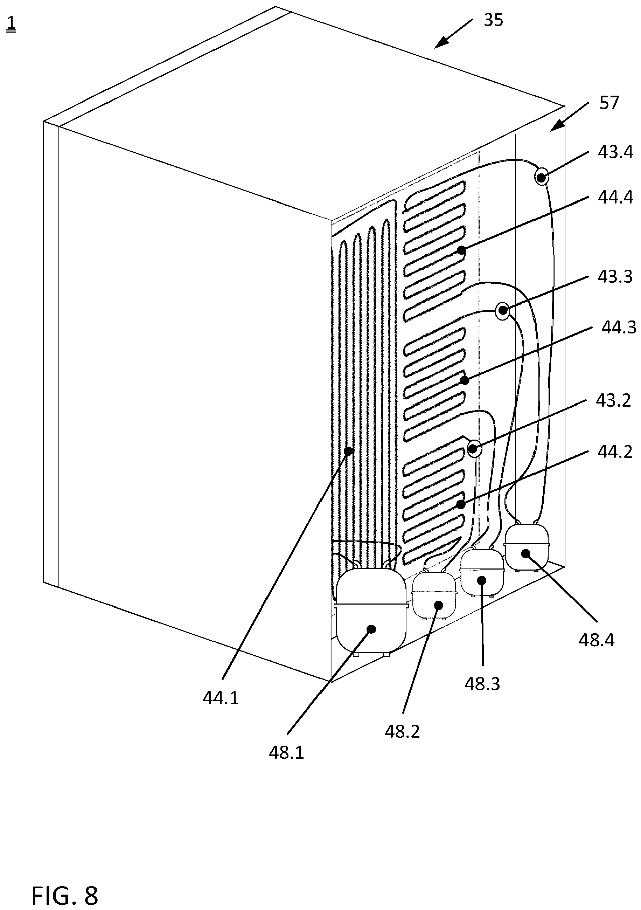

FIG. 8 zeigt eine Rückansicht eines Ausführungsbeispiels des erfindungsgemäßen Systems 1 zur Temperierung oder Erhitzung von Speisen mit vier Kälteerzeugungseinrichtungen. Auf der Rückseite des Gehäuses 35 des Systems ist ein Technikabschnitt 57 vorgesehen. In diesem Technikabschnitt 57 sind die äußeren Komponenten der vier Kälteerzeugungseinrichtungen untergebracht. Eine erste Kälteerzeugungseinrichtung weist außerhalb des Gehäuses 35 einen ersten Verdichter 48.1, eine erste Entspannungseinheit (hier nicht dargestellt) und einen ersten Verflüssiger auf.

In diesem Ausführungsbeispiel sind weitere drei Kälteerzeugungseinrichtungen vorgesehen. Diese Kälteerzeugungseinrichtungen weisen jeweils ein Viertel der Kühlleistung im Vergleich zur erste Kälteerzeugungseinrichtung auf. Diese drei weiteren Kälteerzeugungseinrichtungen weisen jeweils einen Verflüssiger 49.3 bis 49.4 auf, die an der Rückseite des Gehäuses 35 in dem Technikabschnitt 57 vorgesehen sind. Des Weiteren sind in dem Technikabschnitt vier der den jeweiligen Kälteerzeugungseinrichtungen zugehörigen Verdichter 48.1 bis 48.4 und vier der jeweiligen Kälteerzeugungseinrichtung zugehörige Expansionseinheiten 43.1 bis 43.4 untergebracht.

In diesem Ausführungsbeispiel bedeckt der erster Verflüssiger 49.1 mit großer Leistung eine im Verhältnis zu den weiteren Verflüssigern 49.2 bis 49.4 große Fläche. Die weiteren Verflüssiger 49.2 bis 49.4 sind jeweils gleich groß ausgeführt und auf der weiteren Fläche des Technikabschnitts 57 verteilt. Durch eine solche Anordnung lässt sich die Kälteleistung von dem System 1 genau an einen Kältebedarf zur Kühlung der Speisen anpassen. Die Anpassung erfolgt durch Zu- und Wegschalten der einzelnen Kälteerzeugungseinrichtungen, indem der jeweilige Verdichte ein- bzw. ausgeschalten wird.

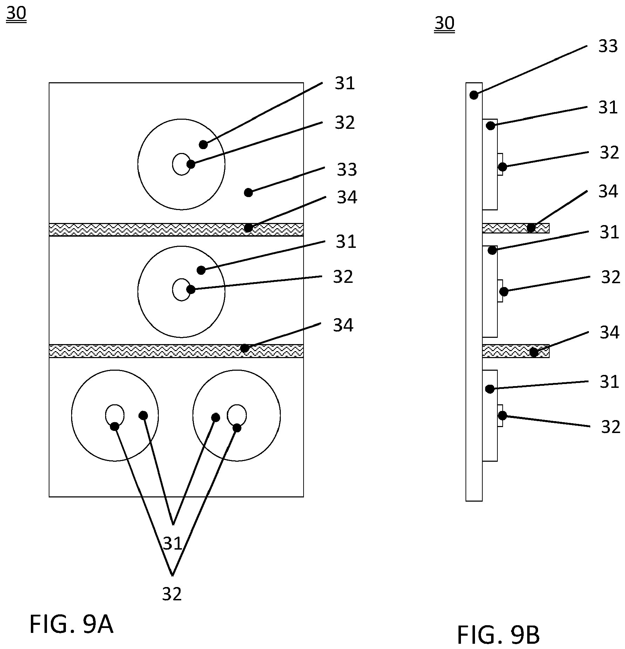

FIG. 9A zeigt die Vorderansicht und FIG. 9B eine Seitenansicht einer Wärmeerzeugungseinrichtung 30 gemäß einem erfindungsgemäßen Ausführungsbeispiel. Die Wärmeerzeugungseinrichtung weist in diesem Beispiel vier elektrische Heizeinheiten 31 und eine zugehörige Temperatursensoreinheit 32 je Heizeinheit 31 auf. Dabei sind die Heizeinheiten 31 flach ausgeführt und flächig auf einem Trägerelement 33 befestigt.

Die Heizeinheiten 31 enthalten beispielsweise ein Widerstandselement. Das Widerstandselement wandelt elektrische Energie in Wärmeenergie um. Diese Wärmeenergie wird über die Oberfläche an die Umgebung abgegeben. Die für die Heizeinheit 31 verwendeten Widerstandselemente sind in einem Kunststoff, bevorzugt in Silikon, eingebettet. Dabei wird einerseits die erzeugte Wärme über die Fläche der Heizeinheit 31 verteilt und andererseits eine elektrische Isolation des Widerstandselements zur Umgebung erreicht. Die dem Trägerelement 33 gegenüberliegende Oberfläche der Heizeinheit 31 kann in einer Lamellenform oder einer Wellenstruktur ausgeführt sein, um die Wärmeübergabe an einen Luftstrom zu verbessern. Alternativ kann auch über Induktion, einen PTC Thermistor oder Gas geheizt werden.

Jede Heizeinheit 31 enthält bevorzugt eine Regeleinheit (hier nicht dargestellt) zur unabhängigen Regelung der Temperatur jeder Heizeinheit 31. Dazu ist jede Heizeinheit 31 und die zugehörige Temperatursensoreinheit 32 funktional mit der Regeleinheit verbunden. Die Regeleinheit erfasst mit der Temperatursensoreinheit 32 die aktuelle Temperatur der jeweiligen zugehörigen Heizeinheit 31. Mit Hilfe der erfassten Temperatur wird anhand eines vorgegebenen Temperaturbereichs die Temperatur der Heizeinheit 31 eingestellt.

Die Temperatursensoreinheiten 32 sind in den Figuren FIG. 9A und FIG. 9B beispielhaft im Zentrum der Heizeinheiten 31 angebracht. Die Anbringung der Temperatursensoreinheiten 32 ist auch an anderen Positionen möglich. Bei der Anbringung der Temperatursensoreinheiten 32 an der Heizeinheiten 31 ist eine gute thermische Kopplung vorgesehen. So lässt sich die Genauigkeit der Regelung verbessern. Die jeweilige Temperatursensoreinheit 32 kann auch gemeinsam mit dem Widerstandselement in der Heizeinheit 31 eingebettet sein.

FIG. 9A und FIG. 9B zeigen beispielhaft zwei thermische Trennelemente 34, die horizontal auf dem Trägerelement 33 angeordnet sind. Die Heizeinheiten 31 können auf eine jeweils unterschiedliche Temperatur eingestellt werden. Mit den Trennelementen 34 sind die Heizelemente 31 inklusive den jeweiligen Temperatursensoreinheiten 32 thermisch entkoppelt. Damit lässt sich die Temperatur jeder der Heizeinheiten 31 unabhängig voneinander exakt einhalten und somit ein besonders effektives Erwärmen von Speisen erreichen.

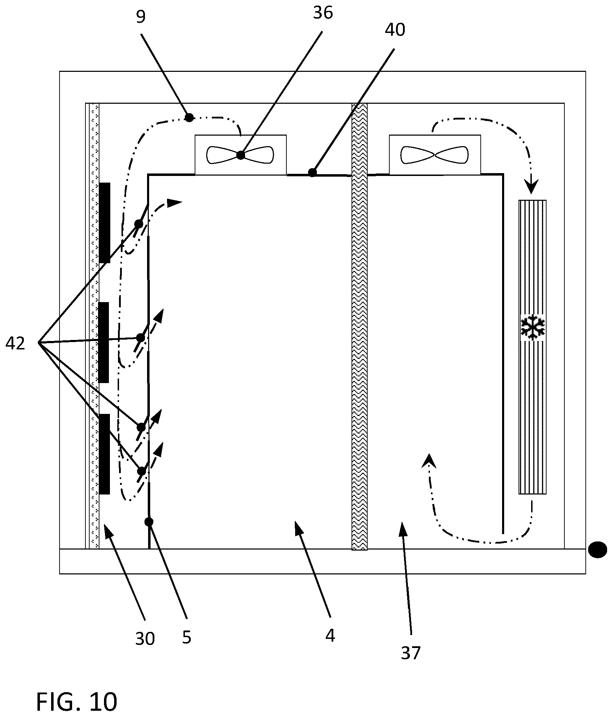

FIG. 10 zeigt ein Ausführungsbeispiel des erfindungsgemäßen Systems zur Temperierung oder Erhitzung von Speisen, bei dem eine Führung von temperierten Luftströmen durch in der Seitenwand 5 angeformte Austrittsstrukturen 42, hier in Form von Lamellen dargestellt, erfolgt. In FIG. 10 ist das System mit zwei Kammern 2, 37, die mit unterschiedlichen Temperaturen beaufschlagt werden sollen, dargestellt. Die Erzeugung des kalte Luftstrom 10 in der rechten Kammer erfolgt entsprechend dem zu FIG. 2 beschriebenen Ausführungsbeispiel.

Der heiße Luftstrom 9 in der linken Kammer 4 des Systems 1 wird mit Hilfe eines Ventilators 38 erzeugt. Der Ventilator 38 ist an der inneren Rückwand 40 angeordnet. Der durch den Ventilator 38 erzeugte Luftstrom wird über die Wärmeerzeugungseinrichtung 30 geleitet, um ihn zu erhitzen. Der durch die Wärmeerzeugungseinrichtung 30 erhitzte und damit heiße Luftstrom 9 wird über die in der Seitenwand angeformten Austrittsstrukturen 42, welche die Austrittsöffnungen bilden, in die entsprechende Kammer 4 eingeleitet. Der heiße Luftstrom 9 wird in diesem Beispiel über vier Lamellen, die die Austrittsstrukturen 42 bilden, in die Kammer 4 eingeleitet. Dabei sind die Lamellen so ausgerichtet, dass deren Öffnung entgegen der Strömungsrichtung des heißen Luftstroms 9 orientiert sind. Die Anzahl, Form und Orientierung der Luftführungen 42 ist nicht auf das in FIG. 10 dargestellte Beispiel beschränkt. Bevorzugt sind die Austrittsstruktur 42 einstückig in der Seitenwand 5 angeformt. Dazu werden die Austrittsstrukturen 42 durch Umformung der Seitenwand 5 mit Hilfe eines Stanzverfahrens und/oder Prägeverfahrens erzeugt.

Die Erfindung ist nicht auf die dargestellten Ausführungsbeispiele beschränkt. Alle vorstehend beschriebenen Merkmale oder in den Figuren gezeigten Merkmale oder in den Ansprüchen beanspruchten Merkmale sind im Rahmen der Erfindung beliebig miteinander kombinierbar.

## Patentansprüche

1. Ein System (1) zur Temperierung oder Erhitzung von Speisen aufweisend: mindestens einen Raum (2) zur Aufnahme mehrerer Trageeinrichtungen (20) für Speisen und mindestens eine Temperiereinrichtung (7, 8), wobei mindestens ein Raum (2) zur Aufnahme mehrerer Trageeinrichtungen (20) mindestens eine Halteeinrichtung (3) aufweist, die dazu ausgelegt ist, die Trageeinrichtung (20) für Speisen aufzunehmen,
wobei die Trageeinrichtungen (20) in dem Raum (2) beabstandet angeordnet sind,
wobei der Raum (2) in zumindest zwei Kammern (4) unterteilt ist, die sich jeweils bis zu zumindest einer Seitenwand (5) erstrecken,
wobei sich zumindest eine der Trageeinrichtungen (20) über mehrere Kammern (4) erstreckt,
wobei jede Kammer (4) unabhängig temperierbar ist, und die Kammern (4) durch eine Trennwand (6) zueinander thermisch isoliert sind,
wobei zumindest eine der Temperiereinrichtungen (7, 8) ein Kältegerät (41) ist,
und wobei das Kältegerät (41) eine Kälteerzeugungseinrichtung und einen Kältespeicher (45) aufweist.

2. Das System nach Anspruch 1,
wobei die Temperiereinrichtung (7, 8) zumindest einen temperierten Luftstrom (9, 10) zum Transport der Wärmeenergie erzeugt, und
wobei mindestens eine Seitenwand (5) der mindestens einen Kammer (4) mindestens eine Austrittsöffnung (11, 11-1, 11-2 .. 11-10) für den Luftstrom (9, 10) aufweist, und
wobei zwischen den temperierten Luftströmen (9, 10) ein Trennelement (12) in der Seitenwand (5) vorgesehen ist, und/oder
wobei in jeder der durch die vertikal beabstandeten Trageeinrichtung gebildeten Teilkammern (4-1 .. 4-10) mindestens eine Austrittsöffnung (11, 11-1, 11-2 .. 11-10) vorgesehen ist, und/oder
wobei die Austrittsöffnung (11, 11-1, 11-2 .. 11-10) den temperierten Luftstrom (9, 10) in eine vorherbestimmte Richtung lenkt.

3. Das System nach Anspruch 1 oder 2,
wobei der Kältespeicher (45) ein Phasenübergangsmaterial, bevorzugt aus der Gruppe der Salzhydrate, der Gashydrate und/oder der Paraffine, und/oder Wasser enthält.

4. Das System nach einem der Ansprüche 1 bis 3,
wobei das Kältegerät (41) zumindest einen Wärmetauscher (46) aufweist, und/oder
wobei der Kältespeicher (45) thermisch mit dem Wärmetauscher (46) in Verbindung steht.

5. Das System nach einem der Ansprüche 1 bis 4,
wobei die Kälteerzeugungseinrichtung mindestens einen Verdichter (48, 48.1 .. 48.4), insbesondere einen Kompressor, aufweist,
wobei die Kälteerzeugungseinrichtung mindestens einen Verdampfer (44, 44.1 .. 44.2) aufweist, der mit jeweils mit einem Verdichter (48, 48.1 .. 48.2) verbunden ist,
wobei der mindestens eine Verdampfer (44, 44.1 .. 44.2) jeweils mit dem Wärmetauscher (46) thermisch gekoppelt ist.

6. Das System nach Anspruch 5,
wobei die Kälteerzeugungseinrichtung mindestens zwei Verdichter (48, 48.1 .. 48.4), insbesondere zwei Kompressoren, und mindestens zwei Verdampfer (44, 44.1 .. 44.2) aufweist,
wobei der zweite und/oder jeder weitere Verdichter (44, 44.1 .. 44.2) zuschaltbar und wegschaltbar ist.

7. Das System nach Anspruch 6,
wobei der erste Verdichter (48.1) mit dem ersten Verdampfer (44.1) bezogen auf die weiteren Verdichter (48.2 .. 48.3) mit den weiteren Verdampfern (44.2 .. 44.3) eine höhere Kälteerzeugungsleistung, bevorzugt eine mindestens doppelte Kälteerzeugungsleitung, besonders bevorzugt eine mindestens vierfache Kälteerzeugungsleitung und am meisten bevorzugt eine mindestens sechsfache Kälteerzeugungsleitung, aufweist.

8. Das System nach Anspruch 2,
wobei die mindestens eine Austrittsöffnung (11, 11-1, 11-2 .. 11-10) für den temperierten Luftstrom (9, 10) direkt in die Seitenwand (5) geformt ist.

9. Das System nach einem der Ansprüche 1 oder 8,
wobei die Seitenwand (5) aus einer Platte, bevorzugt aus einem Metallblech und besonders bevorzugt aus einem Edelstahlblech, besteht.

10. Das System nach einem der Ansprüche 1, 8 oder 9,
wobei die mindestens eine Austrittsöffnung (11, 11-1, 11-2 .. 11-10) für den temperierten Luftstrom (9, 10) eine in der Seitenwand (5) angeformte Austrittsstruktur, bevorzugt eine Lamelle, und/oder eine Düse aufweist.

11. Das System nach einem der Ansprüche 1 bis 10,
wobei jede Trageeinrichtung (20) und/oder Gruppen von Trageeinrichtungen (20) unterschiedlich temperierbar ist bzw. sind.

12. Das System nach einem der Ansprüche 1 bis 11,
wobei der Raum (2) zumindest eine waagerechte Teilung aufweist, die sich jeweils bis zu zumindest einer Seitenwand (5) erstreckt,
wobei sich die waagerechte Teilung bevorzugt über mehrere Kammern (4) erstreckt,
wobei jeder durch die waagerechte Teilung und/oder ein durch die jeweilige Kammer (4) gebildeter Bereich unabhängig temperierbar ist.

13. Eine Wärmeerzeugungseinrichtung (30) zur Integration in ein System (1) zur Temperierung oder Erhitzung von Speisen, insbesondere nach einem der Ansprüche 1 bis 12, aufweisend:
mindestens zwei elektrische Heizeinheiten (31), mindestens eine Temperatursensoreinheit (32) je Heizeinheit (31) und eine Regeleinheit je Heizeinheit (31),
wobei jeweils eine Temperatursensoreinheit (32) an eine Heizeinheit (31) thermisch gekoppelt ist,
wobei jede Heizeinheit (31) und die jeweilige Temperatursensoreinheit (32) mit der Regeleinheit funktional verbunden sind,
wobei die Regeleinheit dazu ausgelegt ist, eine Temperatur der jeweiligen Heizeinheit (31) mit Hilfe der jeweiligen Temperatursensoreinheit (32) in einem vorgegebenen Bereich einzustellen, und
wobei die Temperaturen der Heizeinheiten (31) voneinander unabhängig einstellbar sind.

14. Die Wärmeerzeugungseinrichtung (30) nach Anspruch 13, wobei zumindest eine Heizeinheit (31) auf einem Trägerelement (33) befestigt ist, und/oder wobei zumindest eine Heizeinheit (31) flach ausgeführt ist.

15. Die Wärmeerzeugungseinrichtung (30) nach Anspruch 13 oder 14,
wobei zwischen jeder der Heizeinheiten (31) mit unterschiedlich einstellbarer Temperatur ein thermisches Trennelement (34) vorgesehen ist.

16. Die Wärmeerzeugungseinrichtung (30) nach einem der Ansprüche 13 bis 15,
wobei zumindest eine der Heizeinheiten (31) ein Widerstandselement aufweist, und wobei das Widerstandselement in einem Kunststoff, bevorzugt in Silikon, eingebettet ist.

17. Die Wärmeerzeugungseinrichtung (30) nach Anspruch 16,
wobei die jeweilige Temperatursensoreinheit (32) gemeinsam mit dem Widerstandselement in der Heizeinheit (31) eingebettet ist.

18. Die Wärmeerzeugungseinrichtung (30) nach Anspruch 14,
wobei die dem Trägerelement (33) gegenüberliegende Oberfläche der Heizeinheit (31) eine Lamellenform oder eine Wellenstruktur aufweist.
